# EUROPÄISCHE PATENTSCHRIFT

(11) **EP 2 775 046 B1**
(45) Veröffentlichungstag und Bekanntmachung des Hinweises auf die Patenterteilung: **15.06.2016**
(21) Anmeldenummer: 14000665.1
(22) Anmeldetag: 25.02.2014
(51) Int. Cl.: E03C 1/05, E03C 1/04

(54) **Sanitärarmatur mit elektrischem Sensor**
Sanitary fitting with electric sensor
Robinetterie sanitaire avec capteur électrique

(30) Priorität: 07.03.2013 DE 102013003824
(43) Veröffentlichungstag der Anmeldung: 10.09.2014
(73) Patentinhaber: Grohe AG, 58675 Hemer (DE)
(72) Erfinder: Keiter, Dieter, 58708 Menden (DE); Mielke, Achim, 32457 Porta Westfalica (DE); Luig, Frank-Thomas, 58708 Menden (DE); Gäbel, Gunter, 58708 Menden (DE)

(56) Entgegenhaltungen:
- EP-A2- 0 117 504
- EP-A2- 2 103 749
- WO-A1-2013/009365
- US-A1- 2007 069 169

## Beschreibung

Die vorliegende Erfindung betrifft eine Sanitärarmatur, die zumindest teilweise gegenüber Berührung sensitiv ist. Insbesondere betrifft die Erfindung eine Sanitärarmatur, die einen Näherungssensor und/oder einen Berührungssensor aufweist, bevorzugt in der Ausgestaltung eines kapazitiven Sensors.

Es sind Sanitärarmaturen bekannt, für deren Aktivierung bzw. Deaktivierung nicht die Betätigung eines konkreten Hebels erforderlich ist, sondern die auf die Berührung im Bereich eines Gehäuses der Sanitärarmatur Wasser austreten lassen oder einen bestehenden Wasserfluss wieder verschließen. Hierfür wird insbesondere dem Bediener die Möglichkeit eingeräumt, durch Berühren eines Gehäuseteils mit dem Handrücken, dem Handgelenk oder dem Unterarm das Ausströmen von Wasser zu erreichen. Dies beinhaltet insbesondere den Vorteil, dass die Armatur selbst sauber und ggf. keimfrei gehalten werden kann, insbesondere wird ein Kontakt der Sanitärarmatur mit verschmutzten Händen vermieden.

Hierbei ist insbesondere vorgesehen, dass bei der Berührung bzw. Annäherung an einen vorgegebenen Bereich des Gehäuses eine voreingestellte Volumenmenge und Temperatur des Wassers abgegeben wird. Zusätzlich können Bedienungselemente vorgesehen sein, mit denen dann ein ggf. angepasster Volumenstrom bzw. eine andere Temperatur nachträglich eingestellt werden können. Zur Realisierung dieser Funktion ist bekannt, einen Bereich des Gehäuses nach Art eines kapazitiven Berührungssensors auszubilden. Bevorzugt wird hierbei der sogenannte Wasserhahn zumindest teilweise als kapazitiver Sensor ausgebildet. Durch eine Berührung dieses Gehäuseabschnitts wird der elektrische Widerstand verändert, was mittels einer entsprechenden Kontrolleinheit ausgelesen werden kann. Diese Kontrolleinheit kann dann mindestens ein Ventil der Wasserzufuhr aktivieren bzw. deaktivieren.

Da der sensitive Bereich für den Bediener der Sanitärarmatur leicht zugänglich sein soll, hat sich hier ein Abschnitt des Wasserhahns als bevorzugt herausgestellt. Problematisch ist hierbei jedoch, dass gerade dieser Gehäuseabschnitt vielfach beweglich ausgeführt ist, so dass eine elektrische Verbindung zwischen diesem sensitiven Gehäuseabschnitt und der Kontrolleinheit und/oder der elektrischen Erde über Bewegungsgrenzen hinweg ausgebildet sein muss.

Die WO 2013/009365 A1 offenbart eine gattungsbildende Sanitärarmatur, wobei diese einen Basiskörper und einen Wasserhahn aufweist, wobei letzterer um den Basiskörper verschwenkt werden kann. Ein Teil eines Gehäuses der Sanitärarmatur kann berührungsempfindlich ausgeführt sein (z. B. mit einem kapazitiven Sensor), wobei die elektrischen Signale im Gehäuse innenliegend zu einer Kontrolleinheit geleitet werden.

Die EP 2 103 749 A2 betrifft ein System zur automatischen Aktivierung von Einrichtungen zur Steuerung und Verwaltung der Öffnung des Ventilkörpers von Armaturen für Waschtische. Die Steuerung erfolgt dabei über einen Berührungssensor im Bereich des Auslaufs des Wasserhahns. Aus der US 2007/069169 A1 ist ebenfalls eine Sanitärarmatur bekannt, bei der ein Berührungsfeld am Auslauf des Wasserhahns vorgesehen ist, der mit einer Kontrolleinheit zusammenwirkt, um bedarfsgerecht den Wasserstrom zu regulieren. Beide Dokumente stellen mittels eines elektrisch isolierenden Anschlussstücks sicher, dass zwischen dem Auslauf des Wasserhahns mit dem Sensor und dem Sockel der Sanitärarmatur über das Gehäuse jeder elektrische Kontakt vermieden wird.

Bei dieser elektrischen Verbindung sind besonders hohe Anforderungen an die Beweglichkeit, Dauerhaltbarkeit und/oder Korrosionsbeständigkeit zu stellen. Die hierfür ggf. bekannten Lösungen sind entweder mit einer hohen Teilevielzahl, einer aufwendigen Montage und/oder einer problembehafteten messtechnischen Auswertung verbunden.

Hiervon ausgehend ist es Aufgabe der vorliegenden Erfindung, die mit Bezug auf den Stand der Technik geschilderten Probleme zumindest teilweise zu lösen. Insbesondere soll eine Sanitärarmatur angegeben werden, die in technisch einfacher Weise eine solche elektrische Verbindung zwischen relativ zueinander bewegten Bauteilen der Sanitärarmatur realisiert. Gleichzeitig soll die Sanitärarmatur besonders dauerhaltbar sein und komfortabel betrieben werden können.

Diese Aufgaben werden gelöst mit einer Sanitärarmatur gemäß den Merkmalen des Patentanspruchs 1. Vorteilhafte Ausgestaltungen der Erfindung sind in den abhängigen Patentansprüchen angegeben. Es ist darauf hinzuweisen, dass die in den Patentansprüchen einzeln aufgeführten Merkmale in beliebiger, technologisch sinnvoller Weise miteinander kombiniert werden können und weitere Ausgestaltungen der Erfindung aufzeigen. Die Beschreibung, insbesondere im Zusammenhang mit den Figuren, erläutert diese Merkmale und gibt zusätzliche Ausführungsbeispiele an.

Die Sanitärarmatur weist zumindest einen ersten Gehäuseabschnitt und einen zweiten Gehäuseabschnitt auf, die beweglich zueinander angeordnet sind, wobei der erste Gehäuseabschnitt zusammen mit dem zweiten Gehäuseabschnitt einen elektrischen Sensor bildet. Weiterhin ist zwischen dem ersten Gehäuseabschnitt und dem zweiten Gehäuseabschnitt ein elektrisch leitendes Kopplungsbauteil vorgesehen. Das Kopplungsbauteil umfasst hierbei einen elektrisch leitenden Kunststoff.

Bei der Sanitärarmatur handelt es sich insbesondere um eine fest am Waschtisch zu montierende Basis (ein Gehäuseabschnitt) und einen dazu beweglich, insbesondere drehbar und/oder verschwenkbar, angeordneten Wasserhahn (anderer Gehäuseabschnitt). Insbesondere sind beide Gehäuseabschnitte dazu vorgesehen, einen Teil des Wasserlaufs bis hin zur Austrittsmündung einzufassen. Hierfür ist möglich, dass mindestens ein Gehäuseabschnitt eine (elektrisch) isolierte starre Wasserleitung bildet, es ist aber auch möglich, dass zumindest einer der Gehäuseabschnitte eine flexible Wasserleitung, insbesondere einen Schlauch, aufnimmt.

Während bislang insbesondere das Konzept verfolgt wurde, dass nur ein einzelnes Bauteil des Gehäuses als sensitive Oberfläche ausgebildet ist, wird hier nun vorgeschlagen, dass die beiden gegeneinander beweglichen Bauteile zusammen einen (einzelnen) Sensor bilden, insbesondere nach Art eines kapazitiven Sensors. Das heißt mit anderen Worten insbesondere, dass beide Gehäuseabschnitte auf dem gleichen elektrischen Potential liegen. Insbesondere kann so auch vermieden werden, dass der elektrische Kontakt des beweglichen Gehäuseabschnitts im Inneren des Gehäuseabschnitts verlegt und dann in den anderen Gehäuseabschnitt bspw. mittels eines Kabels weitergeleitet wird. Ebenso können innenliegende, komplexe und störanfällige Schleifkontakte vermieden werden. Insbesondere geht die Erfindung von dem Konzept aus, dass die elektrische Kontaktierung direkt/mittelbar von einem Gehäuseabschnitt auf den anderen übergeht, und dann von dem anderen Gehäuseabschnitt abgenommen werden kann. Dieses ist bevorzugt das feststehende Bauteil, so dass sich hier keine Probleme bei der elektrischen Kontaktierung und Weiterleitung des elektrischen Signals mehr ergeben.

In diesem Zusammenhang ist weiter vorgesehen, dass zwischen dem ersten Gehäuseabschnitt und dem zweiten Gehäuseabschnitt ein elektrisch leitendes Kopplungsbauteil vorgesehen ist. Das elektrisch leitende Kopplungsbauteil ist insbesondere in elektrisch leitender Weise sowohl mit dem ersten Gehäuseabschnitt als auch mit dem zweiten Gehäuseabschnitt in Kontakt. Das Kopplungsbauteil kann sich demnach außenanliegend, innenanliegend und/oder zwischen den Gehäuseabschnitten befinden. Grundsätzlich ist auch möglich, dass bestimmte Bereiche des Kopplungsbauteils elektrisch isoliert sind, um hier ggf. den Kontakt zu benachbarten Bauteilen zu unterbinden. Das Kopplungsbauteil ist bevorzugt so gestaltet, dass es im Verbindungsabschnitt um das Gehäuse herum gleichermaßen wirkt, also eine über den Umfang des Gehäuseabschnitts gleiche Wirkung hinsichtlich des elektrischen Kontakts realisiert.

Bei einem solchen Kopplungsteil ist bevorzugt, dass es eine innere Führungshülse für den zumindest ersten Gehäuseabschnitt oder den zweiten Gehäuseabschnitt bildet. Hierbei wird insbesondere davon ausgegangen, dass die beiden Gehäuseabschnitte im Bereich des Verbindungsbereichs eine Art Rohrstutzen ausbilden.

Das Kopplungsbauteil ist gerade in diesem so gestaltet, dass es in den ersten Gehäuseabschnitt und/oder den zweiten Gehäuseabschnitt eintauchen kann und eine Gestalt hat, dass diese eintauchenden Bereiche eine innen am ersten Gehäuseabschnitt und/oder dem zweiten Gehäuseabschnitt anliegende Führungshülse bilden. Bevorzugt ist, dass das Kopplungsbauteil gleichermaßen eine Führungshülse für den ersten Gehäuseabschnitt und den zweiten Gehäuseabschnitt ausbildet, so dass insbesondere eine axiale Ausrichtung der beiden Gehäuseabschnitte zueinander über das Kopplungsbauteil bereitgestellt ist. Dies hat insbesondere Vorteile für die Dauerhaltbarkeit und/oder die Montage der Sanitärarmatur.

Außerdem ist auch vorgesehen, dass das Kopplungsbauteil einen elektrisch leitenden Kunststoff umfasst. Hierbei ist grundsätzlich möglich, dass das Kopplungsbauteil eine elektrisch leitende Beschichtung und/oder mindestens ein elektrisch leitendes Leiterelement und/oder einen homogen elektrisch leitenden Aufbau aufweist. Somit ist es möglich, das Kopplungsbauteil mit separaten, verschiedenen Funktionsbereichen auszugestalten. Ebenso ist jedoch möglich, ein Multifunktionsbauteil mit einem homogenen Aufbau des Kunststoff-Bauteils zu erreichen. Eine elektrisch leitende Beschichtung ist bevorzugt an den (äußeren) Stellen vorgesehen, bei denen die benachbarten Bauteile, insbesondere der benachbarte Gehäuseabschnitt, keine Relativbewegung zu dem Kopplungsbauteil ausführen. Die Leiterelemente können nach Art von Stegen, aufgedruckten Leiterbahnen oder Ähnlichem ausgeführt sein. Der Kunststoff ist bevorzugt mit einem Thermoplast gebildet. Als Beispiel für einen elektrisch leitenden Kunststoff, der einen homogenen Aufbau aufweist, sei hier PP-EL (elektrisch leitendes Polypropylen) angeführt. Dieses Material wird speziell mit elektrisch leitfähigen Partikeln ausgerüstet, welche in dem Kunststoff verteilt angeordnet sind.

Weiter wird auch vorgeschlagen, dass das Kopplungsbauteil einen Spalt zwischen dem ersten Gehäuseabschnitt und dem zweiten Gehäuseabschnitt in Richtung einer Zentralachse überbrückt. Damit überbrückt das Kopplungsbauteil bspw. einen Spalt zwischen den beiden Gehäuseabschnitten bzw. das Kopplungsbauteil beabstandet den ersten Gehäuseabschnitt von dem zweiten Gehäuseabschnitt. Insbesondere berührt der Bereich des Kopplungsbauteils, der in diesem Spalt angeordnet ist, beide Gehäuseabschnitte in axialer Richtung.

Ganz besonders bevorzugt ist, dass das Kopplungsbauteil gleichzeitig eine innere Führungshülse ausbildet und sich zudem in den Spalt zwischen dem ersten Gehäuseabschnitt und dem zweiten Gehäuseabschnitt erstreckt.

Darüber hinaus wird als vorteilhaft angesehen, dass das Kopplungsbauteil eine Dichtung zwischen dem ersten Gehäuseabschnitt und dem zweiten Gehäuseabschnitt bildet. Hierbei wird insbesondere vermieden, dass in die Gehäuseabschnitte bzw. aus den Gehäuseabschnitten heraus Feuchtigkeit übertreten kann. Weiterhin kann diese Dichtung die Funktion erfüllen, eine potentielle Geräuschbildung bei der Relativbewegung der beiden Gehäuseabschnitte zueinander zu minimieren oder gar vollständig zu beseitigen.

Weiterhin wird als vorteilhaft angesehen, dass am ersten Gehäuseabschnitt oder am zweiten Gehäuseabschnitt ein elektrisch entkoppelter Bedienungshebel vorgesehen ist. Der Bedienungshebel wirkt insbesondere mit einer Mischbatterie zusammen und erlaubt insofern die Regulierung des Wasserstroms und/oder der Wassertemperatur. Der Bedienungshebel ist insbesondere nur an einem der beiden Gehäuseabschnitte fixiert, wobei der Bedienungshebel selbst elektrisch von der sensitiven Oberfläche der Gehäuseabschnitte entkoppelt ist. Insbesondere führt eine Berührung des Bedienungshebels nicht zu einer sensitiven Deaktivierung/Aktivierung des Wasserstroms, wie ein Kontakt im Bereich der Gehäuseabschnitte.

Weiterhin ist bevorzugt, dass der elektrische Sensor ein kapazitiver Näherungssensor oder kapazitiver Berührungssensor ist. Insbesondere für den Fall, dass die Gehäuseabschnitte als kapazitive Berührungssensoren ausgeführt sind, ist bevorzugt, dass der elektrische Widerstand des Kopplungsbauteils kleiner 30.000 Ohm [30 kΩ], insbesondere kleiner 10.000 Ohm [10 kΩ] ist. Insbesondere ist bevorzugt, dass die gesamte äußere Oberfläche des ersten Gehäuseabschnitts und des zweiten Gehäuseabschnitts (und ggf. des Kopplungsbauteils) eine Elektrode des kapazitiven Berührungssensors darstellt.

Als vorteilhaft wird hier auch angesehen, dass eine Kontrolleinheit vorgesehen ist, die mit dem elektrischen Sensor zusammenwirkt und mindestens ein Ventil eines Wasserlaufs aktivieren oder deaktivieren kann. Dabei handelt es sich bevorzugt um ein elektrisches Ventil, welches in Abhängigkeit von der Auswertung des elektrischen Sensors mittels der Kontrolleinheit den Wasserlauf freigibt oder verschließt. Dabei ist in der Kontrolleinheit bevorzugt mindestens ein Speicherelement vorgesehen, das den Zustand des Ventils und/oder einer Mischkartusche archivieren kann, um diesen bei einer erneuten Aktivierung wieder gleichermaßen einzustellen.

Die Erfindung sowie das technische Umfeld werden nachfolgend anhand der Figuren näher erläutert. Es ist darauf hinzuweisen, dass die Figuren schematischer Natur sind. Weiterhin ist anzumerken, dass in den Figuren gleiche Bauteile auch mit gleichen Bezugszeichen versehen sind. Jedenfalls sollen die in den Figuren dargestellten Ausführungsbeispiele die Erfindung als solches nicht beschränken. Es zeigen:
- Fig. 1: einen Aufbau einer Ausführungsvariante der Sanitärarmatur,
- Fig. 2: ein Detail einer weiteren Ausführungsvariante der Sanitärarmatur im Bereich eines Kopplungsbauteils,
- Fig. 3: ein Detail einer weiteren Ausführungsvariante im Bereich eines Kopplungsbauteils,
- Fig. 4: eine Einzelheit eines Kopplungsbauteils, und
- Fig. 5: eine weitere Einzelheit einer anderen Ausführungsform des Kopplungsbauteils.

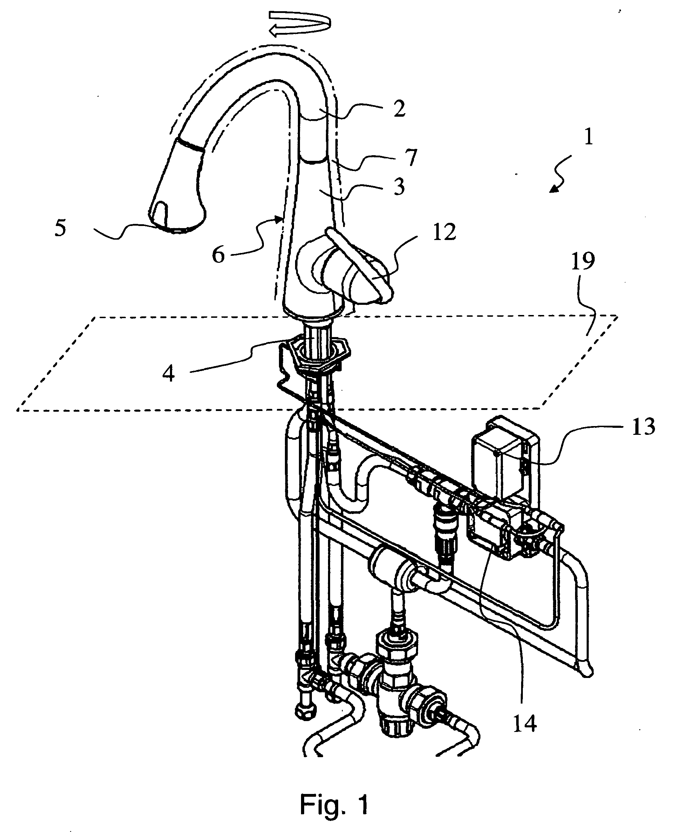

Fig. 1 zeigt schematisch und teilperspektivisch eine installierte Sanitärarmatur 1, die hier bspw. auf einem Waschtisch 19 montiert ist. Oberhalb des Waschtischs 19 sind der erste Gehäuseabschnitt 2 und der zweite Gehäuseabschnitt 3 positioniert, zwischen denen ein Kopplungsbauteil 7 angeordnet ist. Bei der hier gezeigten Ausführungsform bilden der erste Gehäuseabschnitt 2 und der zweite Gehäuseabschnitt 3 eine Art Wasserhahn aus, wobei nahe des ersten Gehäuseabschnitts 2 auch eine Austrittsmündung 5 für das Wasser angeordnet ist. Hierbei ist grundsätzlich möglich, dass die Austrittsmündung 5 fest mit dem ersten Gehäuseabschnitt 2 verbunden ist, es ist aber auch möglich, dass die Austrittsmündung 5 mit einem Strahlbildner eines Schlauchs gebildet ist, wobei dann die Austrittsmündung 5 und der Schlauch elektrisch isoliert zu dem ersten Gehäuseabschnitt 2 angeordnet sind. Seitlich vom zweiten Gehäuseabschnitt 3 hervorstehend ist ein Bedienungshebel 12 ausgebildet. Dieser ist elektrisch isoliert gegenüber dem zweiten Gehäuseabschnitt 3 angebracht.

Wie mit dem Pfeil angedeutet, lässt sich der erste Gehäuseabschnitt 2 gegenüber dem zweiten Gehäuseabschnitt 3 verdrehen. Gleichermaßen sind sowohl der erste Gehäuseabschnitt 2 als auch der zweite Gehäuseabschnitt 3 sensitiv gegen Berührung, bilden also einen gemeinsamen (einzigen) elektrischen Sensor 6 aus, wie insbesondere auch durch die Strich-Punkt-Strich-Linie in Fig. 1 veranschaulicht ist.

In den Gehäuseabschnitten 2, 3 ist insbesondere der Wasserlauf 4 untergebracht. Unterhalb des Waschtischs 19 sind die hierfür erforderlichen Wasseranschlüsse, Ventile sowie eine Kontrolleinheit 13 vorgesehen. Die Kontrolleinheit 13 steht insbesondere in elektrischem Kontakt mit dem ersten Gehäuseabschnitt 2 und dem zweiten Gehäuseabschnitt 3. Insbesondere erkennt die Kontrolleinheit 13, wenn sich das elektrische Feld infolge einer Berührung des ersten Gehäuseabschnitts 2 oder des zweiten Gehäuseabschnitts 3 verändert und schaltet dementsprechend ein elektrisches Ventil 14 mit dem Ergebnis, dass der Wasserzufluss entweder eingeleitet oder gestoppt wird.

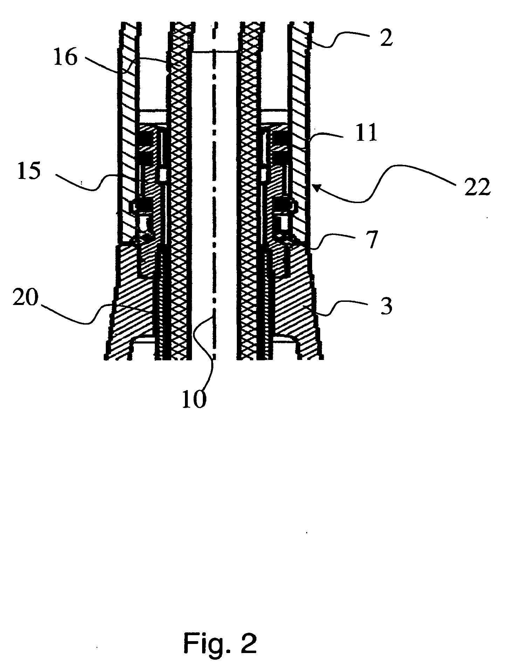

Fig. 2 zeigt im Schnitt eine erste Ausführungsvariante der Sanitärarmatur im Bereich des Übergangs vom ersten Gehäuseabschnitt 2 hin zum zweiten Gehäuseabschnitt 3. Die beiden Gehäuseabschnitte, die hier nach Art von Rohrstutzen ausgebildet sind, bilden eine im Wesentlichen fluchtende Außenoberfläche 22 und sind zueinander stirnseitig bzw. axial (in Richtung der Zentralachse 10) ausgerichtet. Dabei stehen der erste Gehäuseabschnitt 2 und der zweite Gehäuseabschnitt 3 in elektrischem Kontakt zueinander. Im Grenzbereich und innenliegend nahe beider Gehäuseabschnitte 2, 3 ist ein elektrisches Kopplungsbauteil 7 vorgesehen, welches sicher einen elektrischen Kontakt zwischen dem ersten Gehäuseabschnitt 2 und dem zweiten Gehäuseabschnitt 3 realisiert. Grundsätzlich ist möglich, dass der elektrische Kontakt auch zwischen beiden Gehäuseabschnitten direkt realisiert ist. Das elektrische Kopplungsbauteil 7 kann hierbei den elektrischen Kontakt unterstützen oder aber auch gewährleisten, falls ein mechanischer Kontakt zwischen den Gehäusebauteilen selbst nicht (mehr) gegeben ist.

Im Inneren der Gehäuseabschnitte ist dann z. B. eine elektrische Isolierung 15 vorgesehen, die ggf. auch eine Halte- und/oder Ausrichtfunktion bezüglich zumindest eines der beiden Gehäuseabschnitte ausbildet. Die elektrische Isolierung 15 gilt insbesondere gegenüber innenliegenden Bauteilen, wie hier bspw. dem als Schlauch 16 ausgebildeten Wasserlauf 4. Geeignete Dichtungen 11 können hier auch zwischen der Isolierung und den Gehäuseabschnitten vorgesehen sein. Ein Abnehmer 20 (z. B. aus Messing) steht dabei gleichwohl mit dem zweiten Gehäuseabschnitt 3 in Kontakt und bildet einen Potentialausgleich.

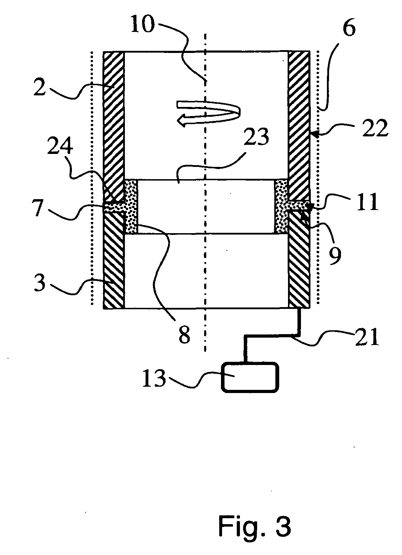

In Fig. 3 ist eine weitere Ausführungsvariante dargestellt, wobei hier insbesondere auf die innen liegenden Bauteilgruppen der beiden Gehäuseabschnitte 2, 3 nicht näher eingegangen wird. Dargestellt ist eine besondere Ausgestaltung des elektrischen Kopplungsbauteils 7. Dieses ist im Wesentlichen nach Art einer Hülse 23 ausgeführt, mit einem umlaufenden, mittig angeordneten Kragen 24. Die sich in Richtung der Zentralachse 10 erstreckenden Bereiche bilden insbesondere eine Führungshülse 8 aus, die durch eine innere Anlage an dem ersten Gehäuseabschnitt 2 und dem zweiten Gehäuseabschnitt 3 eine Ausrichtung dieser beiden Bauteile zueinander ermöglicht und zudem einen sicheren Kontakt zu beiden Gehäuseabschnitten realisiert. Der Kragen 24 des Kopplungsbauteils 7 erstreckt sich in einen Spalt 9 zwischen dem ersten Gehäuseabschnitt 2 und dem zweiten Gehäuseabschnitt 3, so dass das Kopplungsbauteil 7 die beiden Gehäuseabschnitte auch axial zueinander beabstandet. Der innige Kontakt des Kopplungsbauteils 7 im Bereich des Spalts 9 sorgt zudem dazu, dass gleichzeitig eine umlaufende Dichtung 11 gebildet ist. Wiederum bildet die Außenoberfläche 22 der Gehäuseabschnitte 2, 3 sowie des Kopplungsbauteils 7 einen gemeinsamen elektrischen Sensor 6, insbesondere einen kapazitiven Berührungssensor aus. Das elektrische Signal kann hier bspw. an dem feststehenden zweiten Gehäuseabschnitt 3 über eine elektrische Leitung 21 der Kontrolleinheit 13 problemlos weitergegeben werden.

Das Kopplungsbauteil 7 ist bevorzugt einstückig ausgebildet, wobei es bevorzugt mit elektrisch leitendem Kunststoff gebildet ist.

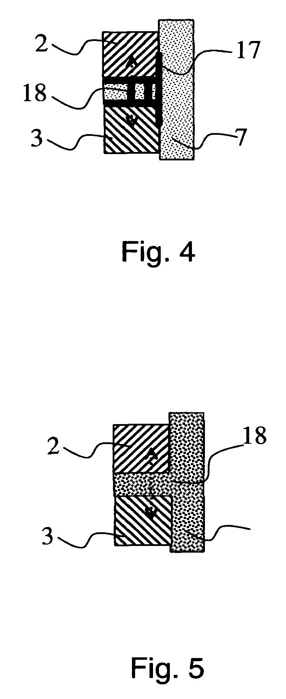

Die Fig. 3 und Fig. 4 zeigen mögliche Ausgestaltungen des Kopplungsbauteils 7, wobei hier im Detail der Bereich zwischen bzw. im direkten Umfeld des Verbindungsbereichs zwischen erstem Gehäuseabschnitt 2 und zweitem Gehäuseabschnitt 3 veranschaulicht ist.

In Fig. 4 ist das Kopplungsbauteil 7 bspw. mit Kunststoff gebildet, wobei es in vorgegebenen Bereichen mit einer elektrisch leitenden Beschichtung 17 und/oder elektrischen Leiterelementen 18 ausgeführt ist. Während eine Beschichtung 17 nur auf der Oberfläche des Kopplungsbauteils 7 vorgesehen ist, durchdringen die elektrischen Leiterelemente 18 zumindest teilweise das Grundmaterial des Kopplungselements 7 und erlauben so eine Weiterleitung eines Stroms durch Bereiche des Kopplungsbauteils 7 hindurch.

Im Gegensatz dazu veranschaulicht Fig. 5 eine Ausführungsvariante eines Kopplungsbauteils 7, bei dem die elektrischen Leiterelemente 18 homogen im Material verteilt sind (z. B. nach Art eines Granulats), so dass ein homogener Aufbau erreicht wird. Hierfür können insbesondere entsprechend leitende Fasern, Partikel oder dergleichen vorgesehen sein, die miteinander in elektrischem Kontakt stehen und somit ebenfalls eine Stromdurchleitung (gerichtet und/oder ungerichtet) realisieren können.

Die hier vorgeschlagene Sanitärarmatur löst somit die eingangs gestellten Aufgaben in technisch einfacher und effektiver Weise.

Vorsorglich sei abschließend noch darauf hingewiesen, dass die in den Figuren gezeigten Kombinationen von technischen Merkmalen nicht generell zwingend sind. So können technische Merkmale einer Figur mit anderen technischen Merkmalen einer weiteren Figur und/oder der allgemeinen Beschreibung kombiniert werden. Etwas anderes soll nur gelten, wenn hier explizit die Kombination von Merkmalen ausgewiesen wurde und/oder der Fachmann erkennt, dass sonst die Grundfunktionen der Vorrichtung nicht mehr erfüllt werden können.

### Bezugszeichenliste

- 1: Sanitärarmatur
- 2: erster Gehäuseabschnitt
- 3: zweiter Gehäuseabschnitt
- 4: Wasserlauf
- 5: Austrittsmündung
- 6: Sensor
- 7: Kopplungsbauteil
- 8: Führungshülse
- 9: Spalt
- 10: Zentralachse
- 11: Dichtung
- 12: Bedienungshebel
- 13: Kontrolleinheit
- 14: Ventil
- 15: Isolierung
- 16: Schlauch
- 17: Beschichtung
- 18: Leiterelemente
- 19: Waschtisch
- 20: Abnehmer
- 21: Leitung
- 22: Außenoberfläche
- 23: Hülse
- 24: Kragen

## Patentansprüche

1. Sanitärarmatur (1), zumindest aufweisend einen ersten Gehäuseabschnitt (2) und einen zweiten Gehäuseabschnitt (3), die beweglich zueinander angeordnet sind, wobei der erste Gehäuseabschnitt (2) zusammen mit dem zweiten Gehäuseabschnitt (3) einen elektrischen Sensor (6) bilden, **dadurch gekennzeichnet, dass** zwischen dem ersten Gehäuseabschnitt (2) und dem zweiten Gehäuseabschnitt (3) ein elektrisch leitendes Kopplungsbauteil (7) vorgesehen ist und das Kopplungsbauteil (7) einen elektrisch leitenden Kunststoff umfasst.

2. Sanitärarmatur (1) nach dem vorhergehenden Patentanspruch, bei der das Kopplungsbauteil (7) eine innere Führungshülse (8) für zumindest den ersten Gehäuseabschnitt (2) oder den zweiten Gehäuseabschnitt (3) bildet.

3. Sanitärarmatur (1) nach einem der vorhergehenden Patentansprüche, bei der das Kopplungsbauteil (7) einen Spalt (9) zwischen dem ersten Gehäuseabschnitt (2) und dem zweiten Gehäuseabschnitt (3) in Richtung einer Zentralachse (10) überbrückt.

4. Sanitärarmatur (1) nach einem der vorhergehenden Patentansprüche, bei der das Kopplungsbauteil (7) eine Dichtung (11) zwischen dem ersten Gehäuseabschnitt (2) und dem zweiten Gehäuseabschnitt (3) bildet.

5. Sanitärarmatur (1) nach einem der vorhergehenden Patentansprüche, bei der am ersten Gehäuseabschnitt (2) oder am zweiten Gehäuseabschnitt (3) ein elektrisch entkoppelter Bedienungshebel (12) vorgesehen ist.

6. Sanitärarmatur (1) nach einem der vorhergehenden Patentansprüche, bei der der elektrische Sensor (6) ein kapazitiver Näherungssensor oder kapazitiver Berührungssensor ist.

7. Sanitärarmatur (1) nach einem der vorhergehenden Patentansprüche, bei der eine Kontrolleinheit (13) vorgesehen ist, die mit dem elektrischen Sensor (6) zusammenwirkt und zumindest ein Ventil (14) eines Wasserlaufs (4) aktivieren oder deaktivieren kann.

## Claims

1. Sanitary fitting (1), at least having a first housing portion (2) and a second housing portion (3), which are arranged so as to be movable relative to one another, the first housing portion (2) and the second housing portion (3) together forming an electrical sensor (6), **characterised in that** an electrically conductive coupling component (7) is provided between the first housing portion (2) and the second housing portion (3), and the coupling component (7) comprises an electrically conductive plastics material.

2. Sanitary fitting (1) according to the preceding patent claim, wherein the coupling component (7) forms an inner guide sleeve (8) for at least the first housing portion (2) or the second housing portion (3).

3. Sanitary fitting (1) according to either one of the preceding patent claims, wherein the coupling component (7) bridges a gap (9) between the first housing portion (2) and the second housing portion (3) in the direction of a central axis (10).

4. Sanitary fitting (1) according to any one of the preceding patent claims, wherein the coupling component (7) forms a seal (11) between the first housing portion (2) and the second housing portion (3).

5. Sanitary fitting (1) according to any one of the preceding patent claims, wherein an electrically decoupled operating lever (12) is provided on the first housing portion (2) or on the second housing portion (3).

6. Sanitary fitting (1) according to any one of the preceding patent claims, wherein the electrical sensor (6) is a capacitive proximity sensor or capacitive touch sensor.

7. Sanitary fitting (1) according to any one of the preceding patent claims, wherein a control unit (13) is provided which co-operates with the electrical sensor (6) and is able to activate or deactivate at least one valve (14) of a water conduit (4).

## Revendications

1. Robinetterie sanitaire (1) comprenant au moins un premier segment de boîtier (2) et un second segment de boîtier (3) qui sont montés mobiles l'un par rapport à l'autre, le premier segment de boîtier (2) formant, avec le second segment de boîtier (3) un capteur électrique (6), **caractérisé en ce qu'**
il est prévu un composant d'accouplement (7) électriquement conducteur entre le premier segment de boîtier (2) et le second segment de boîtier (3), et ce composant d'accouplement (7) renferme un matériau synthétique électriquement conducteur.

2. Robinetterie sanitaire (1) conforme à la revendication précédente, dans laquelle l'élément d'accouplement (7) forme un manchon de guidage interne (8) pour le premier segment de boîtier (2) et/ou le second segment de boîtier (3).

3. Robinetterie sanitaire (1) conforme à l'une des revendications précédentes,
dans laquelle l'élément d'accouplement (7) surmonte une fente (9) située entre le premier segment de boîtier (2) et le second segment de boîtier (3) en direction d'un axe médian (10).

4. Robinetterie sanitaire (1) conforme à l'une des revendications précédentes,
dans laquelle l'élément d'accouplement (7) forme un joint d'étanchéité (11) entre le premier segment de boîtier (2) et le second segment de boîtier (3).

5. Robinetterie sanitaire (1) conforme à l'une des revendications précédentes,
dans laquelle il est prévu un levier de manoeuvre (12) électriquement découplé sur le premier segment de boîtier (2) ou sur le second segment de boîtier (3).

6. Robinetterie sanitaire (1) conforme à l'une des revendications précédentes,
dans laquelle le capteur électrique (6) est un capteur de proximité capacitif ou un capteur de contact capacitif.

7. Robinetterie sanitaire (1) conforme à l'une des revendications précédentes,
dans laquelle il est prévu une unité de commande (13) qui coopère avec le capteur électrique (6), et au moins une soupape (14) peut activer ou désactiver la circulation de l'eau (4).
